# EUROPÄISCHE PATENTSCHRIFT

(11) **EP 3 101 713 B1**
(45) Veröffentlichungstag und Bekanntmachung des Hinweises auf die Patenterteilung: **08.01.2020**
(21) Anmeldenummer: 15170242.0
(22) Anmeldetag: 02.06.2015
(51) Int. Cl.: B60L 3/00, B60L 3/04, H01M 10/0525, H01M 10/48, H01M 2/34

(54) **ÜBERSTROMSCHUTZVORRICHTUNG**
OVERCURRENT PROTECTION DEVICE
DISPOSITIF DE PROTECTION CONTRE LES SURINTENSITÉS

(43) Veröffentlichungstag der Anmeldung: 07.12.2016
(73) Patentinhaber: Samsung SDI Co., Ltd., Yongin-si, Gyeonggi-do (KR)
(72) Erfinder: FRITZ, Jürgen, 8010 Graz (AT); LETTNER, Markus, 8521 Wettmannstätten (AT)
(74) Vertreter: Gulde & Partner

(56) Entgegenhaltungen:
- EP-A1- 2 793 308
- WO-A1-2013/153889
- WO-A1-2013/176087
- US-A1- 2005 073 282

## Beschreibung

### Gebiet der Erfindung

Die vorliegende Erfindung betrifft eine Überstromschutzvorrichtung für ein Batteriesystem und ein Batteriesystem mit einer solchen Überstromschutzvorrichtung.

### Stand der Technik

Derartige Überstromschutzvorrichtungen werden insbesondere bei Lithium-Ionen Batteriesystemen eingesetzt um aus Sicherheitsgründen Komponenten des Hauptstromkreises des Batteriesystems, wie beispielsweise Zellverbinder, Leitungen, Shunts oder Anschlüsse des Batteriesystems, von den Batteriezellen trennen zu können. Zum Schutz der Komponenten vor thermischer bzw. elektrischer Überlastung in einem Fehlerfall wird üblicherweise eine Schmelzsicherung eingesetzt. Die Abschaltbedingungen einer Schmelzsicherung sind jedoch fest vorgegeben und kaum an die Erfordernisse einer solchen Schutzvorrichtung angepasst.

Die Komponenten des Hauptstromkreises eins Batteriesystems weisen individuelle maximale Pulsbelastbarkeiten auf, abhängig von deren Materialeigenschaften, Gewicht, elektrischem Querschnitt und anderem.

Bei der Dimensionierung der Komponente wird üblicherweise eine Sicherung ausgewählt, die den Hauptstrompfad im Fehlerfall sicher trennen kann. Die Auslösung der Sicherung erfolgt dabei idealerweise bevor die Komponenten thermisch oder elektrisch überlastet werden.

Besonders in Anwendungen im Automobilbereich kommt es, auch für 12 Volt Lithium-Ionen Batterien, häufig bereits im Normalbetrieb zu Pulsbelastungen. Damit es aufgrund dieser Pulsbelastungen nicht zu einem Auslösen der Schmelzsicherung kommt, muss ein genügend großer Abstand zwischen der Auslösekennlinie (Strom-Zeit-Kennlinie) der Sicherung einerseits und der Strom-Zeit-Kennlinie der Komponenten andererseits gewählt werden. Daher müssen manche elektrische Komponenten stärker dimensioniert werden, als es deren Lastprofil erfordern würde, damit eine sinnvoll gewählte Schmelzsicherung das schwächste Glied in der Kette bleibt und ihre Funktion gewahrt bleibt.

### Zusammenfassung der Erfindung

Es ist eine Aufgabe der Erfindung, eine verbesserte Überstromschutzvorrichtung für ein Batteriesystem und ein Batteriesystem mit einer solchen Überstromschutzvorrichtung anzugeben, wobei das Abschaltverhalten besser an das Batteriesystem angepasst werden kann, so dass auch die weiteren Komponenten des Batteriesystems ihrem Lastprofil besser entsprechend dimensioniert werden können.

Die Lösung der Aufgabe erfolgt durch eine Überstromschutzvorrichtung für ein Batteriesystem, umfassend eine Strommesseinheit zur Messung einer Mess-Stromstärke des Batteriesystems, eine Trenneinheit zur Unterbrechung eines Stromflusses des Batteriesystems und eine Steuereinheit, wobei die Steuereinheit dazu eingerichtet ist, abhängig von der Mess-Stromstärke und einer von der Steuereinheit abrufbaren, frei vorgebbaren Strom-Zeit-Kennlinie die Trenneinheit zur Unterbrechung des Stromflusses zu aktivieren, wobei die Strom-Zeit-Kennlinie frei programmiert ist derart, dass die Stromwerte für alle Zeitwerte unterhalb der Stromwerte einer weiteren Strom-Zeit-Kennlinie für die Impulsbelastbarkeit einer vorgegebenen Komponente des Batteriesystems liegen, wobei die vorgegebene Komponente ein Kupferleiter oder ein Aluminiumleiter ist und wobei die abrufbare Strom-Zeit-Kennlinie (I4) derart optimiert gewählt ist, dass sie jeweils einen geringen positiven Abstand zur Impulsbelastbarkeit des Kupferleiters I2 aufweist bis zum Erreichen eines maximalen Kurzschlussstromes und für Stromwerte ab dem maximalen Kurzschlussstrom einen höheren Abstand zur Impulsbelastbarkeit des Kupferleiters (I2) hat, um eine rasche Trennung zu gewährleisten.

Die EP 2793308 A1 beschreibt ein Batteriesystem und ein dafür vorgesehenes Kontrollverfahren. Das Batteriesystem weist eine Mehrzahl von in Modulen angeordneten Batteriezellen auf, wobei sowohl die Batteriezellen als auch die Module seriell geschaltet sind.

Das Batteriesystem beinhaltet eine Strommesseinheit und eine Steuereinheit, welche Relais in Abhängigkeit von der Stromstärke steuert.

Die WO 2013/176087 A1, die WO 2013/176087 A1 und die US 2005/0073282 beschreiben ebenfalls Batteriesysteme mit Überwachungsfunktionen.

Keine der bekannten Lösungen offenbart die Auswertung von Strom-Zeit-Kennlinien gemäß der vorliegenden Erfindung.

Erfindungsgemäß ist eine frei vorgebbare, insbesondere frei programmierbare, Strom-Zeit-Kennlinie so hinterlegt, dass eine Steuereinheit auf diese zugreifen und entsprechend dieser Kennlinie eine Trenneinheit ansteuern kann, um somit der vorgegebenen Kennlinie entsprechend eine Trennung von Komponenten des Batteriesystems durchführen zu können.

Hierdurch wird es möglich eine Strom-Zeit-Kennlinie zur Trennung von Komponenten des Batteriesystems beliebig genau auf das Batteriesystem abzustimmen und nicht an die vorgegebene Kennlinie beispielsweise einer Schmelzsicherung gebunden zu sein.

Weiterbildungen der Erfindung sind in den abhängigen Ansprüchen, der Beschreibung sowie den beigefügten Zeichnungen angegeben.

Gemäß einer Ausführungsform kann die Steuereinheit ein Teil der Strommesseinheit sein. Die selbe Steuereinheit kann somit auch zur Steuerung der Messeinheit eingesetzt werden.

Vorzugsweise umfasst die Überstromschutzvorrichtung eine Weckeinheit, die dazu eingerichtet ist, die Steuereinheit von einem Ruhemodus in einen Aktivierungsmodus zu überführen, wenn die Mess-Stromstärke eine vorgegebene Referenz-Stromstärke überschreitet.

Da das Trennen der Komponenten des Batteriesystems jederzeit, außer eventuell im tiefentladenen Zustand der Batterie, gewährleistet sein soll, ist es vorteilhaft in einem Ruhemodus des Steuergerätes dessen Hauptprozessor aufzuwecken.

Dazu kann der gemessene Strom mit einer Referenz-Stromstärke verglichen werden, der zumindest so hoch oder höher liegt, als der maximal zu erwartende Batteriestrom im Ruhemodus. Wenn der gemessene Strom die Referenz-Stromstärke überschreitet, kann die Weckeinheit die Steuereinheit aktivieren.

Durch die im Vergleich zur Systemdynamik schnellen Wake-up Zeiten von Mikroprozessoren ist eine schnelle Erfassung des fließenden Stromes gewährleistet. Dadurch kann eine frei programmierbare Abschaltgrenze realisiert werden, die auch im Ruhemodus gewährleistet ist.

Die Weckeinheit kann ein Teil der Steuereinheit und/oder der Strommesseinheit sein.

Ein erfindungsgemäßes Batteriesystem kann Zellen und einen positiven und einen negativen Anschlusspol umfassen, sowie eine Überstromschutzvorrichtung wie oben beschrieben.

Die Strommesseinheit zur Messung einer Mess-Stromstärke ist bevorzugt zwischen den Zellen und dem positiven oder negativen Anschlusspol des Batteriesystems eingerichtet.

Auch die Trenneinheit ist bevorzugt zwischen den Zellen und dem positiven oder negativen Anschlusspol des Batteriesystems eingerichtet. Insbesondere kann die Trenneinheit zwischen den Zellen und dem selben Anschlusspol angeordnet sein wie die Strommesseinheit.

Vorzugsweise ist die abrufbare Strom-Zeit-Kennlinie so ausgebildet, dass die Stromwerte für alle Zeitwerte unterhalb der Stromwerte einer weiteren Strom-Zeit-Kennlinie einer vorgegebenen Komponente des Batteriesystems liegen, wobei die vorgegebene Komponente ein Kupferleiter oder ein Aluminiumleiter sein kann.

Bevorzugt handelt es sich bei dem erfindungsgemäßen Batteriesystem um eine Lithium-Ionen Batterie. Die Zellen sind daher bevorzugt Lithium-Ionen Zellen, beispielsweise eine 12 Volt Lithium-Ionen Batterie.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer erfindungsgemäßen Überstromschutzvorrichtung in einem Batterie-system.
- Fig. 2: zeigt Strom-Zeit-Kennlinien zur Auslegung der abrufbaren Strom-Zeit-Kennlinie einer erfindungsgemäßen Überstromschutzvorrichtung.

### Detaillierte Beschreibung der Erfindung

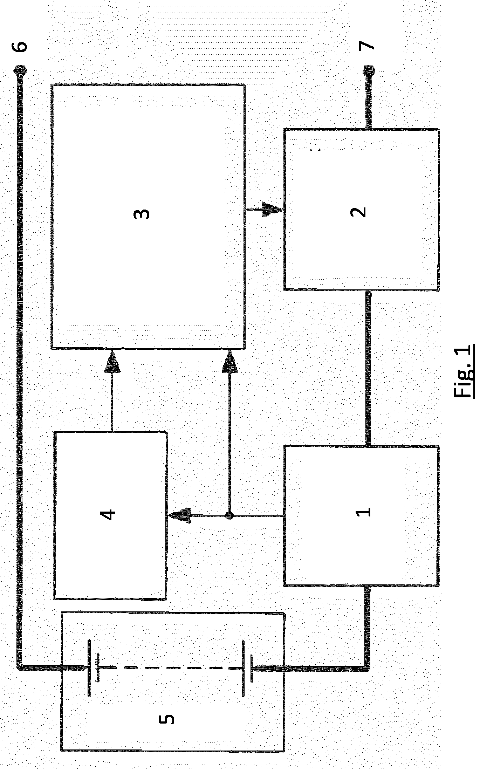

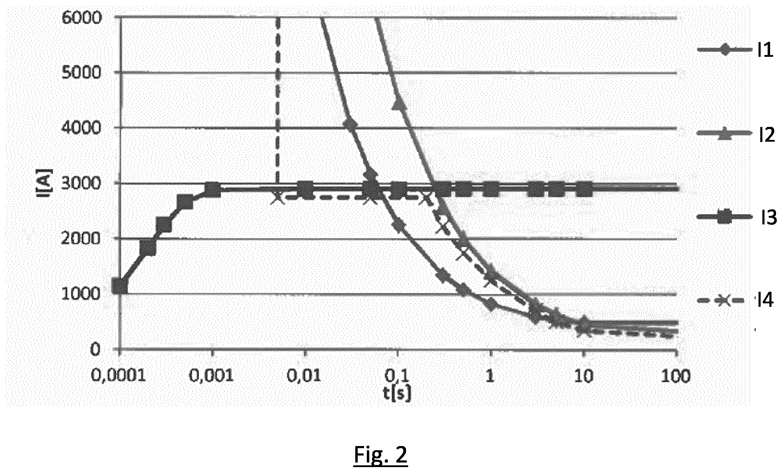

In Fig. 1 ist ein erfindungsgemäßes Batteriesystem umfassend eine Überstromschutzvorrichtung dargestellt. Die Überstromschutzvorrichtung umfasst eine Strommesseinheit 1 zur Messung einer Mess-Stromstärke des Batteriesystems, eine Trenneinheit 2 zur Unterbrechung eines Stromflusses des Batteriesystems, die eventuell benötigte Treiberstufen umfassen kann, und eine Steuereinheit 3 umfassend einen Mikroprozessor, wobei die Steuereinheit 3 dazu eingerichtet ist, abhängig von der Mess-Stromstärke und einer von der Steuereinheit 3 abrufbaren Strom-Zeit-Kennlinie, I4 in Fig. 2, die Trenneinheit 2 zur Unterbrechung des Stromflusses zu aktivieren. Die Strom-Zeit-Kennlinie I4 kann auf der Steuereinheit 3 gespeichert sein und kann frei programmierbar sein.

Die Steuereinheit 3 kann auch ein Teil der Strommesseinheit 1 sein.

Die Überstromschutzvorrichtung umfasst ferner eine Weckeinheit 4, die dazu eingerichtet ist, die Steuereinheit 3 von einem Ruhemodus in einen Aktivierungsmodus zu überführen, wenn die Mess-Stromstärke eine vorgegebene Referenz-Stromstärke überschreitet.

Strommesseinheit 1 und Trenneinheit 2 sind in der dargestellten Ausführungsform zwischen den Zellen 5 eines Batteriesystems, insbesondere einem Zellstapel, und dem negativem Anschlusspol 7 des Batteriesystems angeordnet - sie können aber auch zwischen Zellen 5 und positiven Anschlusspol 6 angeordnet sein.

Fig. 2 zeigt Strom-Zeit-Kennlinien die hilfreich sind zur Auslegung der abrufbaren Strom-Zeit-Kennlinie I4 einer erfindungsgemäßen Überstromschutzvorrichtung.

Dargestellt sind die Strom-Zeit-Kennlinie einer Schmelzsicherung I1 und die Impulsbelastbarkeit eines Kupferleiters I2. Eine Schmelzsicherung wird so gewählt, dass die Strom-Zeit-Kennlinie der Schmelzsicherung I1 jeweils horizontal links von der Impulsbelastbarkeit des Kupferleiters I2 liegt (positiver Abstand), damit die Schmelzsicherung im Fehlerfall rechtzeitig auslöst. Umso geringer der Abstand zwischen den beiden Kennlinien I1, I2 umso stärker wird die Kupferleitung des Batteriesystems belastet. Dabei weicht die Strom-Zeit-Kennlinie einer Schmelzsicherung oft deutlich von der Impulsbelastbarkeit eines Kupferleiters oder einer anderen zu schützenden Komponente ab und kann diese auch schneiden, so dass beispielsweise Kupferleiter einen höheren Querschnitt aufweisen müssen als mit einer optimierten Sicherung erforderlich wäre.

Durch die vorliegende Erfindung kann die Strom-Zeitkennlinie des Trennelementes frei gewählt werden und somit der Sicherheitsabstand zur maximalen Belastbarkeit einer Komponente, wie zum Beispiel des Kupferleiters, optimiert werden, beispielsweise ein minimaler Abstand gewählt werden. Die abrufbare Strom-Zeit-Kennlinie I4 wurde derart optimiert gewählt, dass sie jeweils einen geringen positiven Abstand zur Impulsbelastbarkeit des Kupferleiters I2 aufweist, bis zum Erreichen eines maximalen Kurzschlussstromes. Für Stromwerte ab dem maximalen Kurzschlussstrom hat die Strom-Zeit-Kennlinie I4 einen höheren Abstand zur Impulsbelastbarkeit des Kupferleiters I2 um eine rasche Trennung zu gewährleisten.

### Bezugszeichenliste

- 1: Strommesseinheit
- 2: Trenneinheit
- 3: Steuereinheit
- 4: Weckeinheit
- 5: Zellen
- 6: positiver Anschlusspol
- 7: negativer Anschlusspol

- I1: Strom-Zeit-Kennlinie einer Schmelzsicherung
- I2: Impulsbelastbarkeit von Kupferleitungen
- I3: maximaler Kurzschlussstrom
- I4: abrufbare Strom-Zeit-Kennlinie

## Patentansprüche

1. Überstromschutzvorrichtung für ein Batteriesystem, umfassend eine Strommesseinheit (1) zur Messung einer Mess-Stromstärke des Batteriesystems, eine Trenneinheit (2) zur Unterbrechung eines Stromflusses des Batteriesystems und eine Steuereinheit (3), wobei die Steuereinheit (3) dazu eingerichtet ist, abhängig von der Mess-Stromstärke und einer von der Steuereinheit (3) abrufbaren, frei vorgebbaren Strom-Zeit-Kennlinie (I4) die Trenneinheit (2) zur Unterbrechung des Stromflusses zu aktivieren, wobei die Strom-Zeit-Kennlinie (I4) frei programmiert ist derart, dass die Stromwerte für alle Zeitwerte unterhalb der Stromwerte einer weiteren Strom-Zeit-Kennlinie (I2) für die Impulsbelastbarkeit einer vorgegebenen Komponente des Batteriesystems liegen, wobei die vorgegebene Komponente ein Kupferleiter oder ein Aluminiumleiter ist und wobei die abrufbare Strom-Zeit-Kennlinie (I4) derart optimiert gewählt ist, dass sie jeweils einen geringen positiven Abstand zur Impulsbelastbarkeit des Kupferleiters I2 aufweist bis zum Erreichen eines maximalen Kurzschlussstromes und für Stromwerte ab dem maximalen Kurzschlussstrom einen höheren Abstand zur Impulsbelastbarkeit des Kupferleiters (I2) hat, um eine rasche Trennung zu gewährleisten.

2. Überstromschutzvorrichtung nach Anspruch 1,
**dadurch gekennzeichnet , dass** die Steuereinheit (3) ein Teil der Strommesseinheit (1) ist.

3. Überstromschutzvorrichtung nach zumindest einem der vorhergehenden Ansprüche,
**dadurch gekennzeichnet , dass** die Überstromschutzvorrichtung eine Weckeinheit (4) umfasst, die dazu eingerichtet ist, die Steuereinheit (3) von einem Ruhemodus in einen Aktivierungsmodus zu überführen, wenn die Mess-Stromstärke eine vorgegebene Referenz-Stromstärke überschreitet.

4. Überstromschutzvorrichtung nach Anspruch 3,
**dadurch gekennzeichnet , dass** die Weckeinheit (4) ein Teil der Steuereinheit (3) und/oder der Strommesseinheit (1) ist.

5. Batteriesystem umfassend eine Überstromschutzvorrichtung nach Anspruch 1, wobei das Batteriesystem Zellen (5) umfasst und einen positiven (6) und einen negativen Anschlusspol (7),
**dadurch gekennzeichnet** , die Strommesseinheit (1) zur Messung einer Mess-Stromstärke zwischen den Zellen (5) und dem positiven (6) oder negativen Anschlusspol (7) des Batteriesystems eingerichtet ist.

6. Batteriesystem nach Anspruch 5,
**dadurch gekennzeichnet**, die Trenneinheit (2) zwischen den Zellen (5) und dem positiven (6) oder negativen Anschlusspol (7) des Batteriesystems eingerichtet ist.

7. Batteriesystem nach einem der Ansprüche 5 oder 6, **dadurch gekennzeichnet , dass** die Zellen (5) Lithium-Ionen Zellen sind.

## Claims

1. Overcurrent protection device for a battery system, comprising a current measurement unit (1) for measuring a measurement current intensity of the battery system, a disconnection unit (2) for interrupting a current flow of the battery system, and a control unit (3), wherein the control unit (3) is configured to activate the disconnection unit (2) for interrupting the current flow depending on the measurement current intensity and a freely predefinable current-time characteristic curve (I4) that can be retrieved by the control unit (3), wherein the current-time characteristic curve (I4) is freely programmed such that the current values for all time values are below the current values of an additional current-time characteristic curve (I2) for the pulse load capacity of a predefined component of the battery system, wherein the predefined component is a copper conductor or an aluminium conductor and wherein the retrievable current-time characteristic curve (I4) is selected in an optimised manner such that in each case it is at a low positive distance from the pulse load capacity of the copper conductor (I2) until a maximum short-circuit current is reached, and is at a greater distance from the pulse load capacity of the copper conductor (I2) for current values above the maximum short-circuit current so as to ensure rapid disconnection.

2. Overcurrent protection device according to claim 1, **characterised in that** the control unit (3) is a part of the current measurement unit (1).

3. Overcurrent protection device according to at least one of the preceding claims, **characterised in that** the overcurrent protection device comprises a wake-up unit (4) configured to transfer the control unit (3) from a standby mode into an activation mode when the measurement current intensity exceeds a predefined reference current intensity.

4. Overcurrent protection device according to claim 3, **characterised in that** the wake-up unit (4) is a part of the control unit (3) and/or the current measurement unit (1).

5. Battery system comprising an overcurrent protection device according to claim 1, the battery system comprising cells (5) and a positive terminal (6) and a negative terminal (7), **characterised in that** the current measurement unit (1) is configured to measure a measurement current intensity between the cells (5) and the positive terminal (6) or the negative terminal (7) of the battery system.

6. Battery system according to claim 5, **characterised in that** the disconnection unit (2) is set up between the cells (5) and the positive terminal (6) or the negative terminal (7) of the battery system.

7. Battery system according to any of claims 5 or 6, **characterised in that** the cells are lithium ion cells.

## Revendications

1. Dispositif anti-surintensité pour un système de batterie, comprenant une unité de mesure de courant (1) pour la mesure d'une intensité de courant de mesure du système de batterie, une unité de disjonction (2) pour l'interruption d'un flux de courant du système de batterie et une unité de commande (3), où l'unité de commande (3) est conçue pour activer, en fonction de l'intensité du courant de mesure et d'une courbe caractéristique courant-temps (I4) pouvant être librement prédéterminée et appelée par l'unité de commande (3), l'unité de disjonction (2) pour l'interruption du flux de courant, où la courbe caractéristique courant-temps (I4) est programmée librement, de façon à ce que les valeurs de courant se trouvent, pour toutes les valeurs de temps, en dessous des valeurs de courant d'une autre courbe caractéristique courant-temps (I2) pour la résistance aux impulsions d'un composant prédéterminé du système de batterie, où le composant prédéterminé est un conducteur en cuivre ou un conducteur en aluminium et où la courbe caractéristique courant-temps (I4) pouvant être appelée est choisie de manière optimale de façon à présenter un écart positif faible par rapport à la résistance aux impulsions du conducteur en cuivre I2 jusqu'à atteindre un courant de court-circuit maximal et à présenter, pour des valeurs de courant à partir du courant de court-circuit maximal, un écart plus important par rapport à la résistance aux impulsions du conducteur en cuivre (I2), afin de garantir une disjonction rapide.

2. Dispositif anti-surintensité selon la revendication 1, **caractérisé en ce que** l'unité de commande (3) fait partie de l'unité de mesure de courant (1).

3. Dispositif anti-surintensité selon au moins l'une des revendications précédentes, le dispositif anti-surintensité étant **caractérisé en ce qu'**il comprend une unité de réveil (4) qui est conçue pour faire passer l'unité de commande (3) d'un mode de repos à un mode d'activation lorsque l'intensité du courant de mesure dépasse une intensité de courant de référence prédéterminée.

4. Dispositif anti-surintensité selon la revendication 1, **caractérisé en ce que** l'unité de réveil (3) fait partie de l'unité de commande (3) et/ou de l'unité de mesure de courant (1).

5. Système de batterie comprenant un dispositif anti-surintensité selon la revendication 1, le système de batterie comprenant des cellules (5) et un pôle de raccordement positif (6) et un pôle de raccordement négatif (7),
**caractérisé en ce que** l'unité de commande (1) est conçue pour la mesure d'une intensité de courant de mesure entre les cellules (5) et le pôle de raccordement positif (6) ou négatif (7) du système de batterie.

6. Système de batterie selon la revendication 5, **caractérisé en ce que** l'unité de disjonction (2) est disposée entre les cellules (5) et le pôle de raccordement positif (6) ou négatif (7) du système de batterie.

7. Système de batterie selon l'une des revendications 5 ou 6, **caractérisé en ce que** les cellules (5) sont des cellules lithium-ion.
